# EUROPEAN PATENT SPECIFICATION

(11) **EP 3 266 311 B1**
(45) Date of publication and mention of the grant of the patent: **13.03.2019**
(21) Application number: 17179891.1
(22) Date of filing: 05.07.2017
(51) Int. Cl.: A23G 9/12, A23G 9/22

(54) **ROTATABLE MIXING MEMBER FOR BATCH-FREEZER MACHINES**
ROTIERBARES MISCHELEMENT FÜR BATCH-GERFIERMASCHIENEN
ELEMENT ROTATOF DE MELANGE POUR MACHINES DE CONGÉLATION EN LOT

(30) Priority: 05.07.2016 IT 201600069870
(43) Date of publication of application: 10.01.2018
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A1- 0 275 335
- EP-A1- 1 787 713
- EP-A1- 2 708 142
- DE-A1- 4 426 589

## Description

The present invention relates to a rotatable mixing member for batch-freezer machines.

In more detail, the present invention relates to a rotatable mixing member for horizontal-axis batch-freezer machines for producing homemade ice cream and the like. Use to which the following disclosure will make explicit reference without losing in generality.

As is known, most of the horizontal-axis batch-freezer machines used for producing homemade ice cream are provided with a substantially cylindrical, processing tank that extends horizontally inside the machine, starting from the front face of the machine; with a closing hatch, which is hinged on the front face of the machine so as to be able to pivot about a vertical axis, to and from a closing position wherein the hatch closes the mouth of processing tank in fluid-tight manner; and a rotatable mixing member extending inside the processing tank coaxial to the longitudinal axis of the same tank, and is able to rotate about said longitudinal axis so as to blend and mix the semi-solid mixture which is formed inside the processing tank and to simultaneously remove the ice cream that, during the batch-freezing process, adheres to the cylindrical inner surface of the processing tank.

In more detail, in most of the horizontal-axis batch-freezer machines currently on the market, the rotatable mixing member is basically made up of a series of oblong and platelike longitudinal blades, which extend parallel to the longitudinal axis of the mixing member, at a predetermined distance from the axis, and are also angularly evenly spaced around the same longitudinal axis so as to form a rigid structure substantially in the shape of a cylindrical cage. Each longitudinal blade is also oriented so as to be arranged, when the mixing member is inserted into the processing tank, with one of the two longer lateral edges grazing the cylindrical inner surface of the processing tank.

Usually, the rotatable mixing member is additionally provided with a series of peripheral scraping paddles, usually made of teflon or other similar plastic material, which have a platelike structure and are arranged/placed straddling the external lateral edges of the various longitudinal blades, so as to be locally substantially grazing the cylindrical inner surface of the processing tank.

Generally, each scraping paddle is moreover flag hinged to the body of the blade so as to be able to freely pivot about a reference axis locally parallel and spaced from the external lateral edge of the blade, and is provided with a pair of flexible metal tabs that protrude in a cantilevered manner from the paddle and rest directly on the outer lateral edge of the blade so as to be able to elastically push the scraping paddle towards the outside of the mixing member.

The two metal tabs therefore force the scraping paddle to pivot about the reference axis, until bringing the sharp edge of the scraping paddle into abutment on the cylindrical inner surface of the processing tank.

EP1787713 A1 and EP1787713 A1 disclose such rotatable mixing members.

Unfortunately, in order to reduce the production cost of the scraping paddles, the metal tabs are stuck in unmovable manner into the body of the scraping paddle during injection-moulding of the element, with all the drawbacks that this entails.

The scraping paddle, in fact, must be replaced as a whole even in the case of breakage or cracking of a single metal tab.

In addition, experimental tests have shown that, during the ice cream batch-freezing process, the ice cream tends to accumulate at the metal tabs of the scraping paddles, causing several problems.

Firstly, an excessive accumulation of ice cream at the metal tabs can cause the metal tabs to suddenly break, which all the problems that this entails. Once broken, in fact, the metal tab remains immersed/trapped in the ice cream and may be accidentally served to the final customer with all the risks that this entails.

An excessive accumulation of ice cream at the metal tabs, moreover, makes the extraction of the mixing member from the processing tank more difficult and renders the subsequent cleaning of the mixing member much more laborious.

Aim of the present invention is therefore to eliminate the drawbacks associated with the use of the scraping paddles with protruding metal tabs.

In compliance with the above aims, according to the present invention there is provided a rotatable mixing member for batch-freezer machines as defined in claim 1 and preferably, though not necessarily, in any of the claims dependent therefrom.

According to the present invention, there is additionally provided a scraping paddle suitable for being mounted on a rotatable mixing member for batch-freezer machines, as defined in claim 9 and preferably, though not necessarily, in any of the claims dependent therefrom.

According to the present invention there is finally provided a batch-freezer machine for producing ice cream and the like as defined in claim 16.

The present invention will now be described with reference to the accompanying drawings, which illustrate an example of a non-limiting embodiment wherein:
- Figure 1 is a perspective view of a batch-freezer machine for producing ice cream provided with a rotatable mixing member realized according to the teachings of the present invention;
- Figure 2 is a perspective view of the rotatable mixing member shown in Figure 1;
- Figure 3 is a front view of a part of the rotatable mixing member shown in Figure 2, with parts in section and parts removed for clarity;
- Figure 4 is a perspective view of one of the scraping paddles of the rotatable mixing member shown in Figures 1, 2 and 3;
- Figure 5 is a plan view of the scraping paddle shown in Figure 4; whereas
- Figure 6 is a side view of the scraping paddle shown in Figure 5, sectioned along the V-V section line.

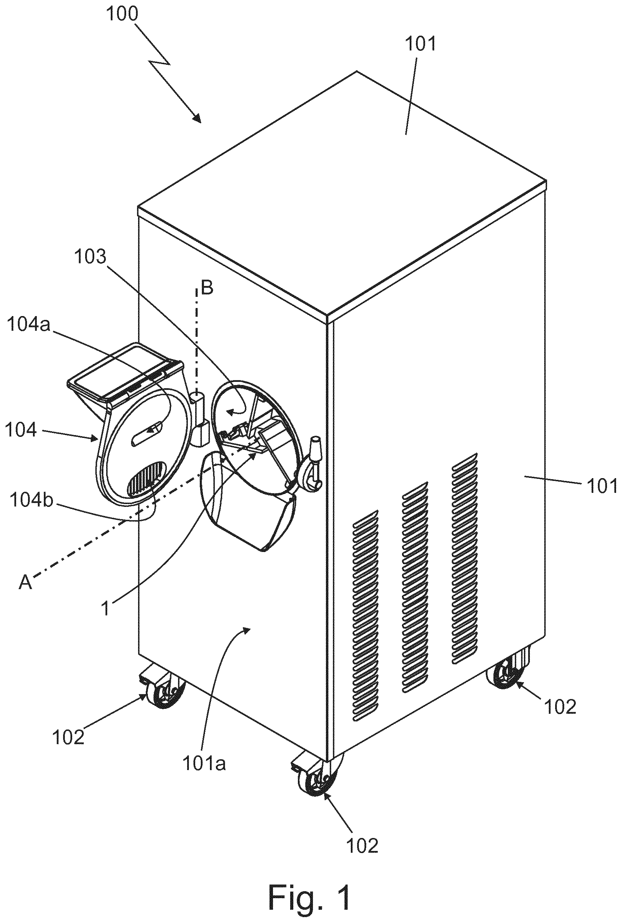

With reference to Figures 1, 2 and 3, number 1 denotes, as a whole, a rotatable mixing member particularly suitable for being fitted in axially rotatable manner inside the processing tank of a batch-freezer machine 100 for producing homemade ice cream and the like, preferably of a horizontal-axis type.

In more detail, the batch-freezer machine 100 for producing homemade ice cream and the like preferably comprises:
- a preferably substantially parallelepiped-shaped, external boxlike casing 101 which is preferably, though not necessarily, provided with ground-resting wheels 102;
- a substantially cylindrical, processing tank 103 having a capacity preferably ranging between 6 and 40 litres and which extends inside the boxlike casing 101, starting from the front wall 101a of the casing 101, while remaining locally coaxially to a reference axis A which is preferably substantially horizontal and preferably also locally substantially perpendicular to the front wall 101a of casing 101; and
- a closing hatch 104 which is movable to and from a closing position in which the body of the hatch 104 is able to close/seal in fluid-tight manner the mouth/inlet of processing tank 103.

In the example shown, in particular, the hatch 104 is mounted movable on the front wall 101a of boxlike casing 101, so that it can be manually placed by the user in said closing position.

In more detail, the hatch 104 is preferably flag hinged to the front wall 101a of boxlike casing 101, adjacent to the mouth/ inlet of processing tank 103 so as to be able to freely pivot about a preferably though not necessarily vertical, reference axis B, to and from a closing position wherein the body 104 of hatch 104 obstructs/closes in fluid-tight manner the mouth of processing tank 103.

With reference to Figure 1, preferably the hatch 104 is also provided with a pass-through loading mouth 104a which is structured so as to allow the user to pour, with the hatch 104 in the closing position, the necessary ingredients to produce the ice cream inside the processing tank 103; and a preferably manually openable, pass-through discharge mouth 104b which is preferably vertically aligned beneath the loading mouth, and is structured so as to allow the selective spillage of the ice cream from the processing tank 103 at the end of the batch-freezing process, always with the hatch 104 in the closing position.

The hatch 104 is a component already widely known in the field of batch-freezer machines and therefore it won't be described in further details.

With reference to Figure 1, the batch-freezer machine 100 additionally comprises the rotatable mixing member 1, which extends inside the processing tank 103 substantially coaxial to the tank longitudinal axis A, preferably substantially for the entire length of processing tank 103, with the possibility of rotating about the tank longitudinal axis A.

The rotatable mixing member 1 is structured, as a whole, so as to be able to blend and mix, while rotating inside the processing tank 103, the semi-solid mixture that forms inside the processing tank 103, and in addition to continually remove the layer of ice cream that adheres to the cylindrical inner surface 103i of the processing tank 103 during the low temperature batch-freezing process.

In more detail, the mixing member 1 is preferably fixed/ pivotally joined in axially rotatable and manually extractable manner to the bottom wall of the processing tank 103.

Inside the boxlike casing 101, moreover the batch-freezer machine 100 additionally comprises:
- an electricity-powered motor assembly (not shown in the figures), which is capable of driving into rotation the mixing member 1 about its longitudinal axis, i.e. about the longitudinal axis A of processing tank 103; and
- an electricity-powered refrigeration assembly (not shown in the figures), which is capable of bringing and maintaining the processing tank 103 and in its content at a creaming temperature below 0°C and preferably ranging between -10°C and -35°C.

The motor assembly and the refrigeration assembly are components already well known in the field of batch-freezer machines and therefore they won't be described in further details.

With reference in particular to Figures 1, 2 and 3, the rotatable mixing member 1 is provided with a longitudinal axis L and is adapted to be inserted in axially rotatable manner inside the processing tank 103 of batch-freezer machine 100, so that the rotation axis substantially coincides with the longitudinal axis L and with the longitudinal axis A of processing tank 103.

In more detail, the mixing member 1 comprises a rigid central structure 2 preferably made of metal material and which extends coaxially to the longitudinal axis L and is adapted to be pivoted in axially rotatable manner inside the processing tank 103, so that its rotation axis substantially coincides with the longitudinal axis L and with the longitudinal axis A of processing tank 103.

The rigid central structure 2 is moreover provided with a plurality of oblong and substantially platelike longitudinal blades 3, which extend more or less parallel to longitudinal axis L and are angularly spaced about the same longitudinal axis L at a predetermined and substantially constant distance from the latter, so as to form a structure resembling a substantially cylindrical cage. At least one and preferably all the longitudinal blades 3 are furthermore oriented so as to arrange a respective longer lateral edge 3a, hereinafter referred to as an external lateral edge, locally grazing the cylindrical inner surface 103i of processing tank 103, preferably substantially for the whole length of processing tank 103.

In the example shown, in particular, the rigid central structure 2 is preferably configured to be pivoted in axially rotatable manner to the bottom of processing tank 103.

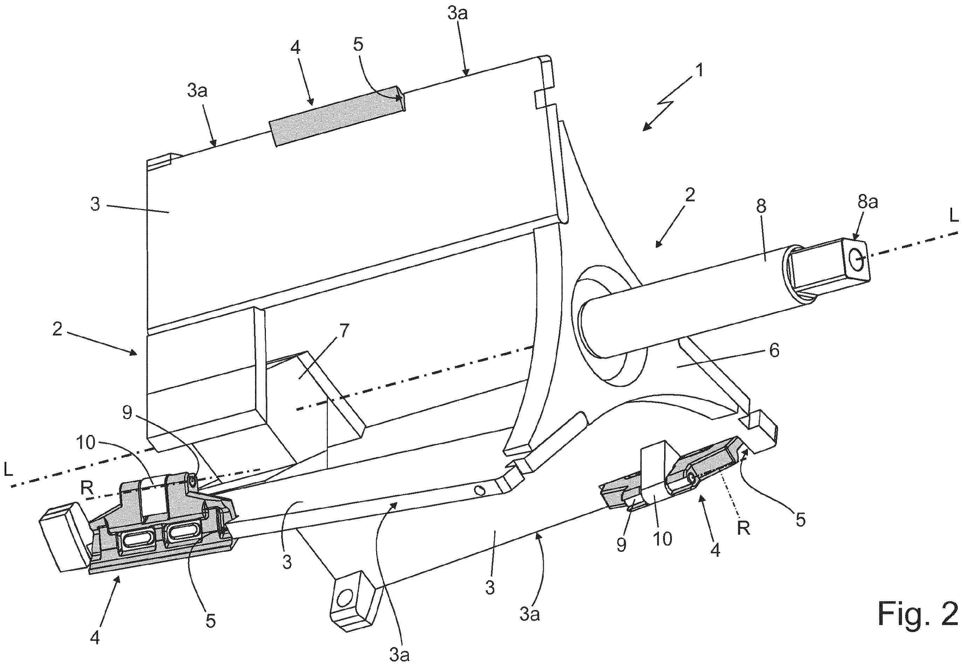

With reference to Figures 2, 3, 4, 5 and 6, in addition the rotatable mixing member 1 also comprises at least one, and preferably a plurality of peripheral scraping paddles 4 which are placed/fixed on the longitudinal blades 3 at respective external lateral edges 3a, so as to scrape the cylindrical inner surface 103i of processing tank 103 to remove the deposits of ice cream.

In more detail, each scraping paddle 4 has a substantially platelike structure, and is placed straddling the external lateral edge 3a of the corresponding longitudinal blade 3, so as to protrude in cantilevered manner from the longitudinal blade 3, on opposite sides of the external lateral edge 3a of the blade, and to be locally facing and grazing the cylindrical inner surface 103i of processing tank 103.

In the example shown, in particular, each scraping paddle 4 extends straddling the external lateral edge 3a of the corresponding longitudinal blade 3 preferably by engaging in pass-through manner a cavity or recess 5 specifically formed on the external lateral edge 3a of the blade.

With reference to Figures 2, 3, 4, 5 and 6, each scraping paddle 4 is moreover flag hinged to the corresponding longitudinal blade 3, so as to be able to freely pivot about a reference axis R which is spaced from the external lateral edge 3a of the blade, and is locally substantially parallel to the adjacent external lateral edge 3a of the blade and/or the longitudinal axis L of the central rigid structure 2; and in addition incorporates an elastic element which is adapted to rest on the longitudinal blade 3, preferably at the external lateral edge 3a, so as to be able to push the scraping paddle 4 in elastic manner towards the outside of the mixing member 1, until bringing the scraping paddle 4 firmly in abutment on the cylindrical inner surface 103i of processing tank 103.

In more detail, the elastic element of scraping paddle 4 forces the scraping paddle 4 to pivot about axis R up to bring and keep the sharp edge 4a of scraping paddle 4 in abutment on the cylindrical inner surface 103i of processing tank 103, so that the scraping paddle 4 can continually scrape the cylindrical inner surface 103i of processing tank 103 while the mixing member 1 rotates around the axis A, i.e. around the axis L, inside the processing tank 103.

Preferably, the scraping paddle 4 is additionally arranged straddling the external lateral edge 3a of the longitudinal blade 3 so that, during rotation of the mixing member 1 inside processing tank 103, the sharp edge 4a precedes the external lateral edge 3a of the blade, and that the external lateral edge 3a of the blade precedes the reference axis R.

In other words, with reference to Figures 1 and 2, the rotatable mixing member 1 comprises: a rigid central structure 2 which is adapted to be inserted in axially rotatable manner about its own longitudinal axis L inside the processing tank 103, and which is provided with a plurality of plate-like longitudinal blades 3 which are angularly spaced about the longitudinal axis L, extend substantially parallel to the longitudinal axis L, and are oriented so as to arrange an external lateral edge 3a substantially grazing the cylindrical inner surface 103i of processing tank 103; and a plurality of scraping paddles 4 which are arranged on at least part of the longitudinal blades 3 of the rigid structure 2, at the external lateral edge 3a of the blades, so as to scrape the cylindrical inner surface 103i of processing tank 103 to remove the deposits of ice cream. At least a first scraping paddle 4 furthermore has a platelike structure and is flag hinged to a corresponding longitudinal blade 3 so as to be able to pivot about a reference axis R locally substantially parallel to the longitudinal axis L of the rigid structure 2 and/or to the external lateral edge 3a of the same blade.

With reference to Figures 1 and 2, in the example shown, in particular, the rigid central structure 2 preferably additionally comprises a front hub 6 and a rear hub 7 which are aligned one facing the other, locally coaxial to the longitudinal axis L, and are properly spaced to one another so as to be arranged, when the mixing member 1 is located inside processing tank 103, one adjacent the bottom of processing tank 103 and the other adjacent the inlet/mouth of processing tank 103.

The front hub 6 is preferably made of metal material and is structured so as to be pivoted in an axially rotatable manner onto the bottom of processing tank 103. The rear hub 7 is preferably made of metal material and is preferably structured so as to be arranged locally grazing and preferably also substantially in rolling prop on the hatch 104.

The longitudinal blades 3, on the other hand, are preferably made of metal material and are rigidly fixed on the periphery of the two hubs 6 and 7 preferably by means of welding.

With reference to Figure 2, in the example shown, in particular, the front hub 6 is preferably provided with a substantially cylindrical central pin 8 that protrudes in cantilevered manner from the opposite side with respect to rear hub 7 while remaining coaxial to the longitudinal axis L of central rigid structure 2.

The central pin 8 is preferably structured/dimensioned so as to be able to fit in an angularly rigid and manually removable manner into a rotating bushing (not shown in the figures) which, in turn, is fixed in axially rotatable manner to the bottom of the processing tank 103, coaxial to the longitudinal axis A, and is mechanically connected to the motor assembly of batch-freezer machine 100, so as to be driven into rotation by the motor assembly around the longitudinal axis A.

In more detail, the distal end 8a of protruding pin 8 is preferably shaped so as to couple in axially slidable and angularly rigid manner to the rotating bushing.

Preferably, the part of rear hub 7 directly facing the hatch 104 is instead shaped so as to form a centrifugal impeller that, while the mixing member 1 rotates inside processing tank 103, is adapted to radially push, towards the cylindrical inner surface 103i of processing tank 103, the semi-solid mixture located at the inlet/mouth of processing tank 103.

With reference to Figure 2, the longitudinal blades 3, in turn, are preferably angularly evenly spaced about the longitudinal axis L of central rigid structure 2, and therefore of the mixing member 1, and each longitudinal blade 3 preferably supports a single scraping paddle 4.

In other words, each scraping paddle 4 is arranged straddling the external lateral edge 3a of a respective longitudinal blade 3.

In the example shown, in particular, the mixing member 1 is preferably provided with three longitudinal blades 3, which are angularly evenly spaced about the longitudinal axis L and are fixed in a rigid and immovable manner to the two hubs 6 and 7 by means of welding.

Preferably, the longitudinal blades 3 furthermore extend from the front hub 6 to the rear hub 7 following a substantially helical trajectory and always keeping their external lateral edge 3a grazing the cylindrical inner surface 103i of processing tank 103, preferably substantially for the whole length of processing tank 103.

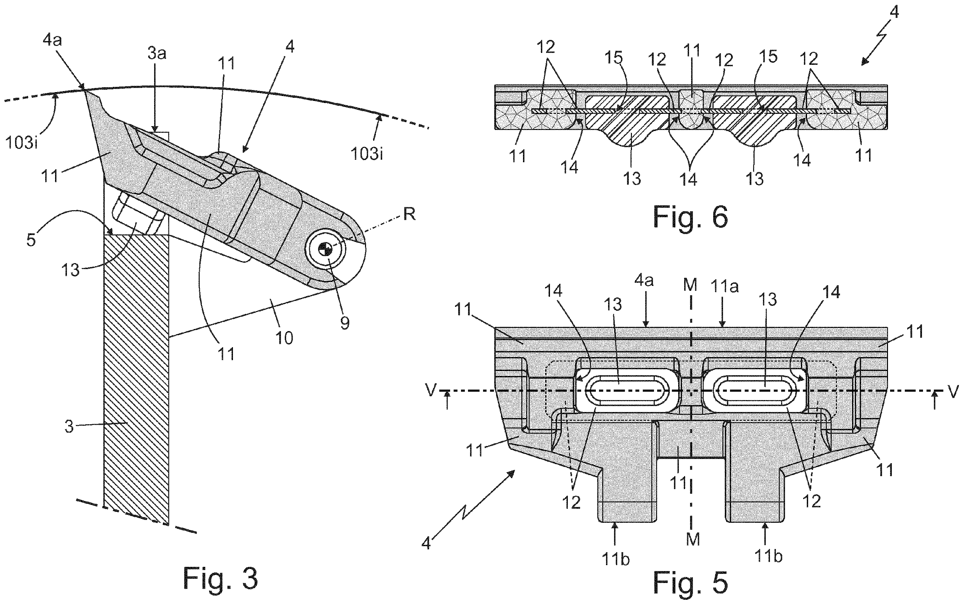

With reference to Figures 2 and 3, in the example shown, in particular, each scraping paddle 4 of mixing member 1 is preferably fitted in axially rotatable manner on a transversal rectilinear pin 9 that extends coaxial to axis R and protrudes in cantilevered manner from a supporting wing 10 which, in turn, protrudes from the rear face of the longitudinal blade 3, preferably in a direction locally substantially perpendicular to the surface of the same rear face.

In more detail, in the example shown, the scraping paddle 4 is preferably fitted in manually removable manner on the transversal rectilinear pin 9.

With reference to Figures 2, 3, 4, 5 and 6, at least one, and preferably each scraping paddle 4 of rotatable mixing member 1 additionally comprises: a platelike body 11 made of plastic material, which is preferably shaped substantially like a chisel, and is adapted to scrape the cylindrical inner surface 103i of processing tank 103 to remove the deposits of ice cream; a stiffening plate 12 made of metal material, which is embedded inside the platelike body 11 during injection moulding of the platelike body 11; and finally at least one buffer pad 13 made of an elastically-deformable elastomeric material, which is permanently attached/fixed directly to the stiffening plate 12 and is shaped so as to protrude outside of platelike body 11 for resting on the body of the longitudinal blade 3 when the scraping paddle 4 is arranged straddling the external lateral edge 3a of the longitudinal blade 3.

In more detail, the buffer pad 13 is preferably made by injection moulding directly on the reinforcement plate 12, preferably before to the injection moulding of the platelike body 11. In addition, the buffer pad 13 is preferably also made of silicone rubber.

When the scraping paddle 4 is flag hinged to the longitudinal blade 3, the buffer pad 13 performs the function of elastic element, and is adapted to restrain the approach of the platelike body 11 to the external lateral edge 3a of the longitudinal blade 3, so as to bring and keep the platelike body 11 in abutment on the cylindrical inner surface 103i of the processing tank 103, in elastic manner.

With reference to Figures 3, 4, 5 and 6, in particular, the platelike body 11 is preferably provided with a front sidewall 11a and with a rear sidewall 11b parallel and opposite each other, which are preferably arranged on opposite sides of the lateral outer edge 3a of the longitudinal blade 3.

The front sidewall 11a is adapted to scrape the cylindrical inner surface 103i of processing tank 103. The rear sidewall 11b, on the other hand, is structured so as to engage/couple in axially rotatable manner onto the longitudinal blade 3 in order to freely pivot about the axis R.

In other words, the rear sidewall 11b of platelike body 11 is structured so as to be flag hinged to the longitudinal blade 3 in order to freely pivot around axis R.

Obviously when the scraping paddles 4 extends straddling the external lateral edge 3a of the longitudinal blade 3 and the mixing member 1 rotates about axis A, the front sidewall 11a of platelike body 11 precedes both the external lateral edge 3a of the blade and the rear sidewall 11b of the platelike body 11.

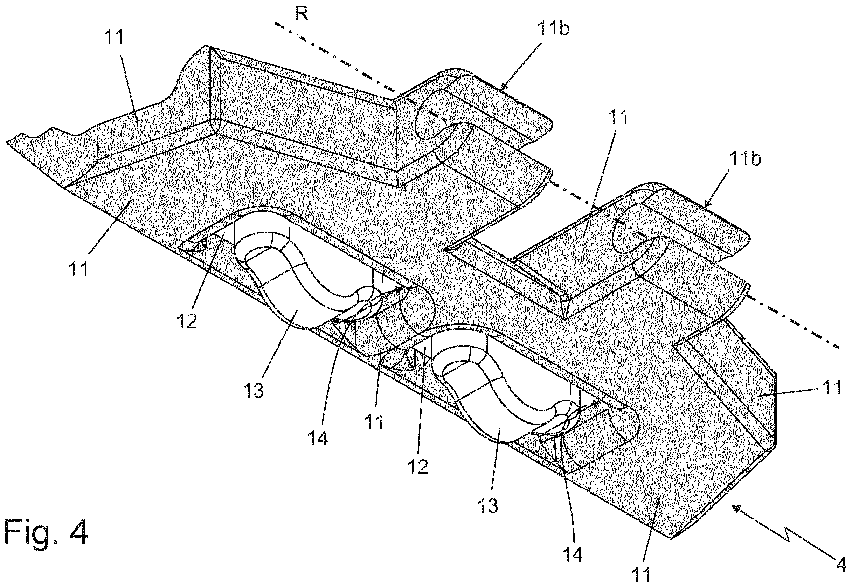

With reference to Figures 4 and 5, the buffer pad 13 is preferably placed on the stiffening plate 12 so as to protrude in cantilevered manner from one of the two larger faces of the platelike body 11 and to arrange itself, when the scraping paddle 4 is flag hinged to the longitudinal blade 3, in abutment on the body of longitudinal blade 3, preferably at the external lateral edge 3a, to hinder the approach of platelike body 11 to the external lateral edge 3a of the longitudinal blade 3.

Preferably, the buffer pad 13 furthermore protrudes outside of platelike body 11 throughout a pass-through opening 14 which is specially formed in platelike body 11 during the injection moulding process of the platelike body 11 and which is closed/obstructed by the stiffening plate 12. Preferably, the buffer pad 13 is additionally dimensioned so as to remain spaced from the platelike body 11 along the perimeter of the pass-through opening 14.

With reference to Figure 6, the buffer pad 13 is finally made by injection moulding directly on the stiffening plate 12, at a pass-through hole 15 specifically formed on plate 12, preferably, though not necessarily, substantially at the centre of the pass-through opening 14.

With reference to Figures 2, 3, 4, 5 and 6, in the example shown, in particular, the platelike body 11 is preferably made of polyoxymethylene (POM), but it may also be made of polytetrafluoroethylene (PTFE), perfluoroalkoxy (PFA) or other plastic material with a low friction coefficient. In addition, the front sidewall 11a of platelike body 11 is preferably substantially rectilinear and is preferably provided with a blade tapered profile so as to be able to remove more easily the deposits of ice cream while scraping the cylindrical inner surface 103i of the processing tank 103.

The rear sidewall 11b of platelike body 11, on the other hand, is preferably C-shaped so that it can embrace and tighten, in axially rotatable and manually removable manner, the transversal rectilinear pin 9 of the longitudinal blade 3.

With reference to Figures 4 and 5, in addition, the platelike body 11 is preferably substantially T-shaped, so as to be pivotally joined onto the longitudinal blade 3 at the base of the trunk of the T, and to scrape the cylindrical inner surface 103i of processing tank 103 with the entire top edge of the upper crossbar of the T.

With particular reference to Figures 2, 4, 5 and 6, in the example shown, moreover, the scraping paddle 4 is preferably provided with two buffer pads 13, which are placed on the stiffening plate 12 on opposite sides of the midplane M of platelike body 11, preferably in a mirrored position.

Each buffer pad 13 furthermore juts out in cantilevered manner outside of the platelike body 11 through a corresponding pass-through opening 14 and is preferably dimensioned so as to remain spaced from the platelike body 11 along the entire perimeter of the same pass-through opening 14. Preferably, each buffer pad 13 is finally made by injection moulding directly on the stiffening plate 12, at a corresponding pass-through hole 15 specifically formed on plate 12 substantially at the centre of the pass-through opening 14.

Operation of rotatable mixing member 1 and of batch-freezer machine 100 are easily inferable from the above, and therefore do not need further explanation.

The advantages resulting from the particular structure of scraping paddles 4 are numerous.

Firstly, the risk of metal parts accidentally falling into the ice cream in the case of breakage is eliminated.

Moreover, the buffer pads 13 are structurally more heavy-duty than the metal tabs currently in use, thus they do not become deformed or damaged when the ice cream accumulates on the scraping paddle 4 and on the external lateral edge 3a of the longitudinal blade 3, thereby increasing in a significant manner the average life-time of the scraping paddle 4.

Furthermore, in use, the buffer pads 13 exert on the respective scraping paddles 4 a radial thrust greater than that exerted by the flexible metal tabs, thus significantly improving the performance of the rotatable mixing member 1.

Additionally, reinforcement plate 12 increases in significant manner the overall structural stiffness of the platelike body 11, allowing to use a lower amount of plastic material for moulding the element.

Experimental tests, furthermore, have shown that the particular structure of buffer pads 13 reduces in significant manner the amount of ice cream accumulating at the scraping paddles 4, with all the advantages that this entails when the rotatable mixing member 1 is to be extracted from processing tank 103 and washed up.

Finally, the injection moulding of buffer pads 13 directly on stiffening plate 12 significantly reduces the production costs of scraping paddles 4. The silicone rubber adhesion capacity on metal materials, in fact, is greater than the silicone rubber adhesion on plastic materials such as polyoxymethylene (POM) or polytetrafluoroethylene (PTFE).

It is finally clear that changes and variations may be made to the scraping paddles 4, to the rotatable mixing member 1 and to the batch-freezer machine 100 described above without, however, departing from the scope of the present invention.

For example, in a different embodiment of the scraping paddle 4, the buffer pad 13 could be accommodated inside a niche that is formed on one of the two larger faces of platelike body 11. In other words, the stiffening plate 12 is placed inside the niche and the buffer pad 13 juts out cantilevered from the mouth of the niche.

In addition, in a less sophisticated embodiment, only some of the longitudinal blades 3 of mixing member 1 support a scraping paddle 4.

In a more sophisticated embodiment, instead, each longitudinal blade 3 of mixing member 1 supports a plurality of scraping paddles 4.

In a different embodiment, finally, the rigid central structure 2 of mixing member 1 lacks the rear hub 7.

## Claims

1. Rotatable mixing member (1) for batch-freezer machines (100) of the type adapted to be housed in axially rotatable manner inside the processing tank (103) of a batch-freezer machine (100), and comprising: at least a platelike longitudinal blade (3) that extends substantially parallel to the longitudinal axis (L) of the mixing member (1), and is oriented so as to arrange an external lateral edge (3a) thereof substantially grazing the cylindrical inner surface (103i) of the processing tank (103); and at least a scraping paddle (4) with platelike structure, which is placed on the longitudinal blades (3) straddling the external lateral edge (3a) of the blade, and is flag hinged to the longitudinal blade (3) so as to be able to pivot about a reference axis (R) locally substantially parallel to the longitudinal axis (L) of the mixing member (1) and/or to the external lateral edge (3a) of the longitudinal blade (3), for arriving in abutment against and scraping the cylindrical inner surface (103i) of the processing tank (103);
said scraping paddle (4) comprising a platelike body (11) which is made of plastic material and is adapted to scrape the cylindrical inner surface (103i) of the processing tank (103);
the rotatable mixing member(1) **being characterized in that** said scraping paddle (4) additionally comprises: a stiffening plate (12) which is made of metal material and is embedded inside the platelike body (11); and at least a buffer pad (13) which is made of elastically deformable elastomeric material, is fixed directly on the stiffening plate (12), and is shaped so as to protrude outside the platelike body (11) for resting in abutment on the body of the longitudinal blade (3) .

2. Rotatable mixing member according to claim 1, **characterized in that** the buffer pad (13) is produced by injection moulding directly on the stiffening plate (12).

3. Rotatable mixing member according to claim 2, **characterized in that** the buffer pad (13) is produced by injection moulding at a pass-through hole (15) formed on said stiffening plate (12).

4. Rotatable mixing member according to any one of the preceding claims, **characterized in that** the buffer pad (13) protrudes outside the platelike body (11) through an opening (14) which is formed in the platelike body (11) during injection moulding of the platelike body (11).

5. Rotatable mixing member according to claim 4, **characterized in that** the buffer pad (13) is dimensioned so as to remain spaced from the platelike body (11) along the whole perimeter of said opening (14).

6. Rotatable mixing member according to any one of the preceding claims, **characterized in that** the platelike body (11) is provided with a front sidewall (11a) adapted to scrape the cylindrical inner surface (103i) of the processing tank (103); and with a rear sidewall (11b) structured so as to be coupleable in axially rotatable manner with the longitudinal blade (3) for being able to rotate about said reference axis (R) .

7. Rotatable mixing member according to any one of the preceding claims, **characterized in that** the scraping paddle (4) comprises two buffer pads (13) located on the stiffening plate (12), on opposite sides of the midplane (M) of the platelike body (11).

8. Rotatable mixing member according to any one of the preceding claims, **characterized in that** the scraping paddle (4) extends straddling the external lateral edge (3a) of the longitudinal blade (3) engaging a cavity or recess (5) present on said external lateral edge (3a).

9. Scraping paddle (4) adapted to be flag hinged to the longitudinal blade (3) of a rotatable mixing member (1) for batch-freezer machines (100), so as to be able to scrape the cylindrical inner surface (103i) of the processing tank (103) to remove the deposits of ice cream;
said scraping paddle (4) comprising a platelike body (11) which is made of plastic material and is adapted to scrape the cylindrical inner surface (103i) of the processing tank (103);
said scraping paddle (4) being **characterised by** additionally comprising: a stiffening plate (12) which is made of metal material and is embedded inside the platelike body (11); and at least a buffer pad (13) which is made of elastically deformable elastomeric material, is fixed directly on the stiffening plate (12) and is shaped so as to protrude outside the platelike body (11) for resting on the body of the longitudinal blade (3).

10. Scraping paddle according to claim 9, **characterised in that** the buffer pad (13) is produced by injection moulding directly on the stiffening plate (12).

11. Scraping paddle according to claim 10, **characterised in that** the buffer pad (13) is produced by injection moulding at a pass-through hole (15) formed in said stiffening plate (12) .

12. Scraping paddle according to claim 9, 10 or 11, **characterised in that** the buffer pad (13) protrudes outside the platelike body (11) through an opening (14) formed in the platelike body (11) during injection moulding of the platelike body (11).

13. Scraping paddle according to claim 12, **characterised in that** the buffer pad (13) is dimensioned so as to remain spaced from the platelike body (11) along the whole perimeter of said opening (14).

14. Scraping paddle according to any one of claims 9 to 13, **characterised in that** the platelike body (11) is provided with a front sidewall (11a) adapted to scrape the cylindrical inner surface (103i) of the processing tank (103); and with a rear sidewall (11b) structured for being flag hingeable to the longitudinal blade (3).

15. Scraping paddle according to any one of claims 9 to 14, **characterised by** comprising two buffer pads (13) located on the stiffening plate (12), on opposite sides of the midplane (M) of the platelike body (11).

16. Batch-freezer machine (100) for producing ice cream and the like comprising: an external boxlike casing (101); a substantially cylindrical, processing tank (103) extending inside the box-like casing (101); a closing hatch (104) which is movable to and from a closing position in which the body of the hatch (104) is capable of closing/sealing in a fluid-tight manner the mouth/inlet of the processing tank (103); a mixing member (1) inserted in axially rotatable manner inside the processing tank (103), locally substantially coaxial to the longitudinal axis (A) of the tank; a motor assembly capable of driving into rotation the mixing member (1) inside the processing tank (103); and a refrigeration assembly capable of bringing and maintaining the processing tank (103), and its content, at a temperature below 0°C and preferably ranging between -10°C to -35°C;
the batch-freezer machine (100) being **characterised in that** said mixing member (1) is realized according to any one of Claims 1 to 9.

## Patentansprüche

1. Drehbares Mischglied (1) für Batch-Gefriermaschinen (100) des Typs, der angepasst ist, axial drehbar innerhalb des Verarbeitungstanks (103) einer Batch-Gefriermaschine (100) untergebracht zu sein, und umfassend:
zumindest einen plattenartigen Längsspatel (3), der sich im Wesentlichen parallel zu der Längsachse (L) des Mischglieds (1) erstreckt und so ausgerichtet ist, dass eine externe laterale Kante (3a) davon im Wesentlichen so angeordnet wird, dass sie der zylindrischen Innenfläche (103i) des Verarbeitungstanks (103) streift; und zumindest eine Abstreifschaufel (4) mit plattenartiger Struktur, die an den Längsspateln (3) platziert ist, die die externe laterale Kante (3a) des Flügels überspannen, und an dem Längsspatel (3) mit einem Flag bzw. einer Kennzeichnung angelenkt ist, um in der Lage zu sein, um eine Bezugsachse (R) lokal im Wesentlichen parallel zu der Längsachse (L) des Mischglieds (1) und/oder zu der externen lateralen Kante (3a) des Längsspatels(3) zu schwenken, um gegen die zylindrische Innenfläche (103i) des Verarbeitungstanks (103) in Anlage zu kommen diese abzustreifen;
wobei die Abstreifschaufel (4) einen plattenartigen Körper (11) umfasst, der aus Kunststoffmaterial besteht und angepasst ist, die zylindrische Innenfläche (103i) des Verarbeitungstanks (103) abzustreifen;
wobei das drehbare Mischglied (1) **dadurch gekennzeichnet ist, dass** die Abstreifschaufel (4) zusätzlich umfasst: eine Versteifungsplatte (12), die aus Metallmaterial besteht und in den plattenartigen Körper (11) eingebettet ist; und
zumindest ein Pufferkissen (13), das aus elastisch verformbarem elastomerem Material besteht, direkt an der Versteifungsplatte (12) fixiert bzw. befestigt ist und so geformt ist, dass es außerhalb des plattenartigen Körpers (11) vorsteht, um auf dem Körper des Längsspatels (3) zu ruhen.

2. Drehbares Mischglied nach Anspruch 1, **dadurch gekennzeichnet, dass** das Pufferkissen (13) durch Spritzgießen direkt auf der Versteifungsplatte (12) hergestellt ist.

3. Drehbares Mischglied nach Anspruch 2, **dadurch gekennzeichnet, dass** das Pufferkissen (13) durch Spritzgießen an einem Durchgangsloch (15) hergestellt ist, das an der Versteifungsplatte (12) ausgebildet ist.

4. Drehbares Mischglied nach einem der vorhergehenden Ansprüche, **dadurch gekennzeichnet, dass** das Pufferkissen (13) aus dem plattenartigen Körper (11) durch eine Öffnung (14) hervorsteht, die während des Spritzgießens des plattenartigen Körpers (11) in dem plattenartiger Körper (11) gebildet wird.

5. Drehbares Mischglied nach Anspruch 4, **dadurch gekennzeichnet, dass** das Pufferkissen (13) so dimensioniert ist, dass es entlang des gesamten Umfangs der Öffnung (14) von dem plattenartigen Körper (11) beabstandet bleibt.

6. Drehbares Mischglied nach einem der vorhergehenden Ansprüche, **dadurch gekennzeichnet, dass** der plattenartige Körper (11) mit einer vorderen Seitenwand (11a), die angepasst ist, die zylindrische Innenfläche (103i) des Verarbeitungstanks (103) abzukratzen; und mit einer hinteren Seitenwand (11b) versehen ist, die so strukturiert ist, dass sie axial drehbar mit dem Längsspatel (3) koppelbar ist, um in der Lage zu sein, sich um die Referenzachse (R) zu drehen.

7. Drehbares Mischglied nach einem der vorhergehenden Ansprüche, **dadurch gekennzeichnet, dass** die Abstreifschaufel (4) zwei Pufferkissen (13) umfasst, die sich an der Versteifungsplatte (12) auf gegenüberliegenden bzw. entgegengesetzten Seiten der Mittelebene (M) des plattenartigen Körpers (11) befinden.

8. Drehbares Mischglied nach einem der vorangehenden Ansprüche, **dadurch gekennzeichnet, dass** sich die Abstreifschaufel (4) die externe laterale Kante (3a) des Längsspatels (3) überspannend erstreckt, wobei sie in einen Hohlraum oder eine Aussparung (5) eingreift, die an der externen lateralen Kante (3a) vorhanden ist.

9. Abstreifschaufel (4), die angepasst ist, mit einem Flag bzw. einer Kennzeichnung an den Längsspatel (3) eines drehbaren Mischglieds (1) für Batch-Gefriermaschinen (100) angelenkt zu werden, um in der Lage zu sein, die zylindrische Innenfläche (103i) des Verarbeitungstanks (103) abzustreifen, um die Ablagerungen von Eiscreme zu entfernen;
wobei die Abstreifschaufel (4) einen plattenartigen Körper (11) umfasst, der aus Kunststoffmaterial besteht und angepasst ist, die zylindrische Innenfläche (103i) des Verarbeitungstanks (103) abzustreifen;
wobei die Abstreifschaufel (4) **dadurch gekennzeichnet ist, dass** sie zusätzlich umfasst: eine Versteifungsplatte (12), die aus Metallmaterial besteht und in den plattenartigen Körper (11) eingebettet ist; und zumindest ein Pufferkissen (13), das aus elastisch verformbarem elastomerem Material besteht, direkt an der Versteifungsplatte (12) fixiert bzw. befestigt ist und so geformt ist, dass es außerhalb des plattenartigen Körpers (11) vorsteht, um auf dem Körper des Längsspatels (3) zu ruhen.

10. Abstreifschaufel nach Anspruch 9, **dadurch gekennzeichnet, dass** das Pufferkissen (13) durch Spritzgießen direkt auf der Versteifungsplatte (12) hergestellt ist.

11. Abstreifschaufel nach Anspruch 10, **dadurch gekennzeichnet, dass** das Pufferkissen (13) durch Spritzgießen an einem Durchgangsloch (15) hergestellt ist, das in der Versteifungsplatte (12) ausgebildet ist.

12. Abstreifschaufel nach Anspruch 9, 10 oder 11, **dadurch gekennzeichnet, dass** das Pufferkissen (13) aus dem plattenartigen Körper (11) durch eine Öffnung (14) hervorsteht, die während des Spritzgießens des plattenartigen Körpers (11) in dem plattenartiger Körper (11) gebildet wird.

13. Abstreifschaufel nach Anspruch 12, **dadurch gekennzeichnet, dass** das Pufferkissen (13) so dimensioniert ist, dass es entlang des gesamten Umfangs der Öffnung (14) von dem plattenartigen Körper (11) beabstandet bleibt.

14. Abstreifschaufel nach einem der Ansprüche 9 bis 13, **dadurch gekennzeichnet, dass** der plattenartige Körper (11) mit einer vorderen Seitenwand (11a), die angepasst ist, die zylindrische Innenfläche (103i) des Verarbeitungstanks (103) abzustreifen; und mit einer hinteren Seitenwand (11b) versehen ist, die so strukturiert ist, dass sie mit einem Flag bzw. einer Kennzeichnung an dem Längsspatel (3) anlenkbar ist.

15. Abstreifschaufel nach einem der Ansprüche 9 bis 14, **dadurch gekennzeichnet, dass** sie zwei Pufferkissen (13) umfasst, die sich an der Versteifungsplatte (12) auf gegenüberliegenden bzw. entgegengesetzten Seiten der Mittelebene (M) des plattenartigen Körpers (11) befinden.

16. Batch-Gefriermaschine (100) zum Herstellen von Eiscreme und dergleichen, umfassend: ein externes kastenartiges Gehäuse (101); einen im Wesentlichen zylindrischen Verarbeitungstank (103), der sich innerhalb des kastenartigen Gehäuses (101) erstreckt; eine Schließluke (104), die zu und aus einer Schließposition bewegbar ist, in der der Körper der Luke (104) in der Lage ist, die Mündung/den Einlass des Verarbeitungstanks (103) fluiddicht zu verschließen/versiegeln; ein Mischglied (1), das axial drehbar in den Verarbeitungstank (103) eingesetzt ist, und zwar lokal im Wesentlichen koaxial zu der Längsachse (A) des Tanks; eine Motoranordnung, die in der Lage ist, das Mischglied (1) innerhalb des Verarbeitungstanks (103) in Drehung zu versetzen; und eine Kälte- bzw. Kühlanordnung, die in der Lage ist, den Verarbeitungstank (103) und seinen Inhalt auf eine Temperatur unter 0°C, und vorzugsweise in den Bereich zwischen -10°C und -35°C zu bringen und zu halten;
wobei die Batch-Gefriermaschine (100) **dadurch gekennzeichnet ist, dass** das Mischglied (1) gemäß einem der Ansprüche 1 bis 9 realisiert ist.

## Revendications

1. Elément de mélange rotatif (1) pour des machines de congélation en lots (100) du type adapté pour être logé de manière à pouvoir tourner axialement dans le réservoir de traitement (103) d'une machine de congélation en lots (100), et comprenant : au moins une pale longitudinale de type plaque (3) qui s'étend sensiblement parallèlement à l'axe longitudinal (L) de l'élément de mélange (1), et est orientée de sorte à agencer une arête latérale externe (3a) de celle-ci rasant sensiblement la surface intérieure cylindrique (103i) du réservoir de traitement (103) ; et au moins une palette de raclage (4) avec une structure de type plaque qui est placée sur les pales longitudinales (3) chevauchant l'arête latérale externe (3a) de la pale, et est articulée en drapeau à la pale longitudinale (3) de sorte à être apte à pivoter autour d'un axe de référence (R) situé sensiblement parallèlement à l'axe longitudinal (L) de l'élément de mélange (1) et/ou à l'arête latérale externe (3a) de la pale longitudinale (3), pour arriver en butée contre et racler la surface intérieure cylindrique (103i) du réservoir de traitement (103) ;
ladite palette de raclage (4) comprenant un corps de type plaque (11) qui est réalisé en matériau plastique et est adapté pour racler la surface intérieure cylindrique (103i) du réservoir de traitement (103) ;
l'élément de mélange rotatif (1) **étant caractérisé en ce que** ladite palette de raclage (4) comprend en outre : une plaque de raidissement (12) qui est réalisée en matériau métallique et est intégrée à l'intérieur du corps de type plaque (11) ; et au moins un patin tampon (13) qui est réalisé en matériau élastomère élastiquement déformable, est fixé directement sur la plaque de raidissement (12), et est formé de sorte à faire saillie en dehors du corps de type plaque (11) pour reposer en butée contre le corps de la pale longitudinale (3).

2. Elément de mélange rotatif selon la revendication 1, **caractérisé en ce que** le patin tampon (13) est produit par moulage par injection directement sur la plaque de raidissement (12).

3. Elément de mélange rotatif selon la revendication 2, **caractérisé en ce que** le patin tampon (13) est produit par moulage par injection sur un trou débouchant (15) formé sur ladite plaque de raidissement (12).

4. Elément de mélange rotatif selon l'une quelconque des revendications précédentes, **caractérisé en ce que** le patin tampon (13) fait saillie en dehors du corps de type plaque (11) au travers d'une ouverture (14) qui est formée dans le corps de type plaque (11) pendant le moulage par injection du corps de type plaque (11).

5. Elément de mélange rotatif selon la revendication 4, **caractérisé en ce que** le patin tampon (13) est dimensionné de sorte à rester espacé du corps de type plaque (11) le long du périmètre entier de ladite ouverture (14).

6. Elément de mélange rotatif selon l'une quelconque des revendications précédentes, **caractérisé en ce que** le corps de type plaque (11) est doté d'une paroi latérale avant (11a) adaptée pour racler la surface intérieure cylindrique (103i) du réservoir de traitement (103) ; et avec une paroi latérale arrière (11b) structurée de sorte à pouvoir être couplée de manière à pouvoir tourner axialement avec la pale longitudinale (3) afin d'être apte à tourner autour dudit axe de référence (R).

7. Elément de mélange rotatif selon l'une quelconque des revendications précédentes, **caractérisé en ce que** la palette de raclage (4) comprend deux patins tampons (13) situés sur la plaque de raidissement (12), sur des côtés opposés du plan médian (M) du corps de type plaque (11).

8. Elément de mélange rotatif selon l'une quelconque des revendications précédentes, **caractérisé en ce que** la palette de raclage (4) s'étend en chevauchant l'arête latérale externe (3a) de la pale longitudinale (3) en mettant en prise une cavité ou un évidement (5) présent(e) sur ladite arête latérale externe (3a).

9. Palette de raclage (4) adaptée pour être articulée en drapeau à la pale longitudinale (3) d'un élément de mélange rotatif (1) pour des machines de congélation en lots (100), de sorte à être apte à racler la surface intérieure cylindrique (103i) du réservoir de traitement (103) pour retirer les dépôts de crème glacée ; ladite palette de raclage (4) comprenant un corps de type plaque (11) qui est réalisé en matériau plastique et est adapté pour racler la surface intérieure cylindrique (103i) du réservoir de traitement (103) ;
ladite palette de raclage (4) étant **caractérisée en ce qu'**elle comprend en outre : une plaque de raidissement (12) qui est réalisée en matériau métallique et est intégrée à l'intérieur du corps de type plaque (11) ; et au moins un patin tampon (13) qui est réalisé en matériau élastomère élastiquement déformable, est fixé directement sur la plaque de raidissement (12) et est formé de sorte à faire saillie en dehors du corps de type plaque (11) pour reposer sur le corps de la pale longitudinale (3).

10. Palette de raclage selon la revendication 9, **caractérisée en ce que** le patin tampon (13) est produit par moulage par injection directement sur la plaque de raidissement (12).

11. Palette de raclage selon la revendication 10, **caractérisée en ce que** le patin tampon (13) est produit par moulage par injection sur un trou débouchant (15) formé dans ladite plaque de raidissement (12).

12. Palette de raclage selon la revendication 9, 10 ou 11, **caractérisée en ce que** le patin tampon (13) fait saillie en dehors du corps de type plaque (11) au travers d'une ouverture (14) formée dans le corps de type plaque (11) pendant le moulage par injection du corps de type plaque (11).

13. Palette de raclage selon la revendication 12, **caractérisée en ce que** le patin tampon (13) est dimensionné de sorte à rester espacé du corps de type plaque (11) le long du périmètre entier de ladite ouverture (14).

14. Palette de raclage selon l'une quelconque des revendications 9 à 13, **caractérisée en ce que** le corps de type plaque (11) est doté d'une paroi latérale avant (11a) adaptée pour racler la surface intérieure cylindrique (103i) du réservoir de traitement (103) ; et d'une paroi latérale arrière (11b) structurée pour pouvoir être articulée en drapeau à la pale longitudinale (3).

15. Palette de raclage selon l'une quelconque des revendications 9 à 14, **caractérisée en ce qu'**elle comprend deux patins tampons (13) situés sur la plaque de raidissement (12), sur des côtés opposés du plan médian (M) du corps de type plaque (11).

16. Machine de congélation en lots (100) pour la production de crème glacée et similaire comprenant : un carter de type caisson externe (101) ; un réservoir de traitement (103) sensiblement cylindrique s'étendant à l'intérieur du carter de type caisson (101) ; une trappe de fermeture (104) qui est mobile vers et depuis une position de fermeture, dans laquelle le corps de la trappe (104) est apte à fermer/sceller de manière étanche au fluide l'embouchure/l'entrée du réservoir de traitement (103) ; un élément de mélange (1) inséré de manière à pouvoir tourner axialement dans le réservoir de traitement (103), localement sensiblement coaxialement à l'axe longitudinal (A) du réservoir ; un ensemble de moteur apte à entraîner en rotation l'élément de mélange (1) dans le réservoir de traitement (103) ; et un ensemble de réfrigération apte à amener et maintenir le réservoir de traitement (103), et son contenu, à une température inférieure à 0 °C et de préférence variant entre -10 °C et -35 °C ;
la machine de congélation en lots (100) étant **caractérisée en ce que** ledit élément de mélange (1) est réalisé selon l'une quelconque des revendications 1 à 9.
